# EUROPÄISCHE PATENTSCHRIFT

(11) **EP 2 076 680 B1**
(45) Veröffentlichungstag und Bekanntmachung des Hinweises auf die Patenterteilung: **29.02.2012**
(21) Anmeldenummer: 07802254.8
(22) Anmeldetag: 11.09.2007
(51) Int. Cl.: F16B 31/02

(54) **ANKER**
ANCHOR
ANCRAGE

(30) Priorität: 14.10.2006 DE 102006048655
(43) Veröffentlichungstag der Anmeldung: 08.07.2009
(73) Patentinhaber: fischerwerke GmbH & Co. KG, 72178 Waldachtal (DE)
(72) Erfinder: SPIETH, Hannes, 70794 Filderstadt (DE); SCHILLINGER, Peter, 72224 Ebhausen (DE); HOFMANN, Jan, 72280 Dornstetten (DE)
(86) Internationale Anmeldenummer: PCT/EP2007/007888
(87) Internationale Veröffentlichungsnummer: WO 2008/043417

(56) Entgegenhaltungen:
- CA-A- 964 942
- DE-A1- 3 447 414
- US-A1- 2005 100 428

## Beschreibung

Die Erfindung betrifft eine Anordnung eines Ankers und eines Gegenstandes zur Besfestigung an einem einem Untergund mit den Merkmalen des Oberbegriffs des Anspruchs 1 (US 2005/100428 A1).

Zur Befestigung von Gegenständen an einem Untergrund sind verschiedenste Anker, auch Dübel genannt, bekannt. Sie können unterschieden werden in solche, die verspreizend verankern, in solche die in einem hinterschnittenen Bohrloch verankert sind, und solche, die mittels einer aushärtbaren Masse im Untergrund verankert werden. Weiterhin ist es bekannt, derartige Dübel so zu gestalten, dass sie im Falle eines durch das Bohrloch verlaufenden Risses nachspreizen können. Derartige Anker sind insbesondere für die Befestigung in der Zugzone eines Untergrundes, beispielsweise an der Unterseite einer Betondecke, geeignet. Mehr und mehr tritt die Forderung auf, Anker derartig zu verbessern, dass sie auch bei starken Belastungen durch Erdbeben nicht versagen. Dabei erfolgt das Versagen vorwiegend durch eine Querbeanspruchung, d.h. durch eine Bewegung des Gegenstandes relativ zum Untergrund und quer zur Längsachse des Ankers, d.h. üblicherweise parallel zur Oberfläche des Untergrundes. Im Ruhezustand wird eine derartige Querbelastung des Dübels weitgehend dadurch vermieden, dass der Dübel gegen den Untergrund axial vorgespannt wird und dadurch den Gegenstand gegen die Oberfläche des Untergrundes presst. Die dabei entstehenden Flächennormalkräfte erzeugen flächenparallele Reibkräfte, die möglichen Querkräften am Gegenstand entgegenwirken können. Aus der Druckschrift DE 101 34 809 A1 ist es beispielsweise bekannt, ein reibkraftverstärkendes Element zwischen Gegenstand und Untergrund zu klemmen, um die Aufnahmefähigkeit von Querkräften in diesem Bereich zu verbessern. Bei starken schockartigen Belastungen, wie sie bei Erdbeben auftreten, und gleichzeitigen Bohrlochaufweitungen durch Risse im Untergrund kann sich ein Anker, wie in der genannten Druckschrift dargestellt, dennoch axial verschieben. Dies ist zum Nachspreizen eines Ankers generell auch notwendig. Ohne weitere Maßnahmen führt dies jedoch dazu, dass die Vorspannkraft des Ankers nachlässt, mit der Folge, dass die Reibkräfte zwischen Gegenstand und Untergrund reduziert werden und eine Bewegung des Gegenstandes gegenüber dem Untergrund erfolgt. Dies führt zu einer für das Versagen des Ankers kritischen Querbelastung des Ankers. Um diesem Effekt entgegenzuwirken, können Federelemente zwischen dem Anker und dem Gegenstand vorgesehen werden. Beispielhaft sei hier die Druckschrift DE 33 31 097 A1 genannt. Wenngleich diese Federelemente die Vorspannkräfte teilweise erhalten, kann ein Versagen bei schockartigen Belastungen nur unzureichend begegnet werden. So müssen die im Ruhezustand durch das Federelement wirkenden Axialkräfte aufgrund der axialen Belastbarkeit des Ankers begrenzt werden, da sonst statt Versagen durch Querkräfte ein Versagen durch Axialkräfte droht.

Der Erfindung liegt daher die Aufgabe zugrunde, Anker zu schaffen, die bei vergleichbarer Dimensionierung höhere Belastungen, insbesondere bei Erdbeben, aufnehmen können.

Erfindungsgemäß wird diese Aufgabe durch einen Anker mit den Merkmalen des Anspruchs 1 gelöst. Die Erfindung geht davon aus, dass eine Querbewegung des Gegenstandes gegenüber dem Untergrund letztlich nicht verhinderbar ist. Sie schlägt daher vor, dass der Anker eine Übersetzungseinrichtung aufweist, die die Querbewegung in eine erhöhte Vorspannkraft, d.h. eine Axialkraft auf den Anker, übersetzt. Sollte es also zu einer derartigen Querbewegung kommen, so erhöht sich allein schon durch die Übersetzungseinrichtung die Vorspannkraft, ohne dass hierzu ein Federelement zwingend zusätzlich erforderlich ist. Durch die Erhöhung der Vorspannkraft erhöht sich die Normalkraft zwischen Gegenstand und Untergrund und somit die Reibkräfte, welche wiederum der Verschiebung zwischen Gegenstand und Untergrund entgegenwirken. Es entsteht also eine Art Bremswirkung, die idealerweise so gestaltet ist, dass mit zunehmender Verschiebung des Gegenstandes die Vorspannung proportional oder überproportional ansteigt. Dabei ist es selbstverständlich erforderlich, dass ein gewisses radiales Spiel zwischen Anker und Gegenstand besteht, so dass eine zumindest leichte Verschiebung nicht zu einem radialen Kontakt zwischen Anker und Gegenstand derart führt, dass es noch vor dem Stoppen der Bewegung zu einer unmittelbaren Querkraftübertragung an dieser Stelle kommt.

Da nicht jede Querkraft auf dem Anker zum Versagen des Ankers führt, weist dieser vorzugsweise ein Querkraftelement auf, welches genau dann versagt, wenn eine kritische Querkraft erreicht wird, d.h. das Querkraftelement gibt eine Bewegung des Gegenstandes relativ zum Untergrund frei, bevor der Anker aufgrund von Querkräften versagt. Hierzu weist das Querkraftelement beispielsweise eine Sollbruchstelle auf.

Vorzugsweise weist der Anker außerdem ein Rückstellelement auf, das bewirkt, dass im Idealfall der Gegenstand nach einer Verschiebung aus seiner Ursprungsposition wieder in diese zurückkehrt. Das Rückstellelement bewirkt also eine Rückstellkraft auf den Gegenstand, die der ersten Bewegung des Gegenstandes entgegenwirkt.

Als Übersetzungseinrichtung schlägt die Erfindung vor, ein Gleitlager zwischen einem Befestigungsabschnitt des Ankers und dem Gegenstand vorzusehen. Mit dem Befestigungsabschnitt des Ankers ist jener Teil gemeint, der aus dem Bohrloch im Untergrund herausschaut und hier insbesondere eine auf den Schaft des Ankers aufgeschraubte Mutter, oder ein mit dem Anker einstückiger Schraubenkopf. Das Gleitlager soll eine Bewegung zwischen Befestigungsabschnitt und Gegenstand gezielt erleichtern. Entsprechend ist der Begriff "Gleitlager" nicht eng auszulegen, sondern im Sinne einer gewollten Beweglichkeit zu verstehen. So sind beispielsweise Wälzlager auch mit erfasst. Vorzugsweise weist das Gleitlager sphärische Gleitflächen auf. Dabei sind die Gleitflächen in Richtung des Untergrundes gesehen konkav ausgebildet. Sphärische Gleitflächen haben den Vorteil einer einfachen Geometrie, die bei jeder Bewegung des Gegenstandes in Richtung der Oberfläche des Untergrundes eine Übersetzung dieser Bewegung in eine Axialbewegung bewirken. Um möglichst gute Gleiteigenschaften zu erreichen, können die Gleitflächen poliert und/oder beschichtet sein. Auch kann ein Schmiermittel zwischen den Gleitflächen vorgesehen sein.

Um möglichst gut die Vorspannung des Ankers bei schockartiger Belastung erhalten zu können, weist eine bevorzugte Ausführungsform des Ankers zusätzlich zu der Übersetzungseinrichtung ein Federelement zwischen dem Befestigungsabschnitt des Ankers und dem Gleitlager auf. Diese Kombination bietet bei entsprechender Abstimmung eine besonders gute Möglichkeit, das Verhalten bei unterschiedlichsten Quer- und Axialkräften zu optimieren. Vorzugsweise ist das Federelement zwischen dem Befestigungsabschnitt des Ankers und dem Gleitlager angeordnet.

Alternativ oder vorzugsweise zusätzlich zu dem Federelement kann ein Dämpfungselement vorgesehen werden, das die Querbewegung des Gegenstandes zum Anker dämpft. Es kann beispielsweise zwischen den sphärischen Lagerschalen und dem Schaft des Ankers oder parallel zu dem beschriebenen Federelement angeordnet sein. Mit parallel" ist gemeint, dass es in gleicher Richtung wie das Federelement wirkt, es kann also beispielsweise ein kombiniertes Feder-Dämpfer-Element vorgesehen werden. Auch ist eine Kombination von Dämpfungselementen an mehreren Stellen möglich.

Vorzugsweise hat die Übersetzungseinrichtung die Form einer Einheit, die in eine Ausnehmung des zu befestigenden Gegenstandes einsetzbar ist. Von dem Hersteller des Gegenstandes muss also beispielsweise nur eine Durchgangsbohrung in vorgegebenem Durchmesser vorgesehen werden.

Die Erfindung wird nachfolgend anhand eines Ausführungsbeispiels beschrieben.

Es zeigen:
- Figur 1: das Ausführungsbeispiel in montiertem Zustand in einer Schnittdarstellung; und
- Figur 2: das gleiche Ausführungsbeispiel in Schnittdarstellung nach Verschieben des befestigten Gegenstandes.

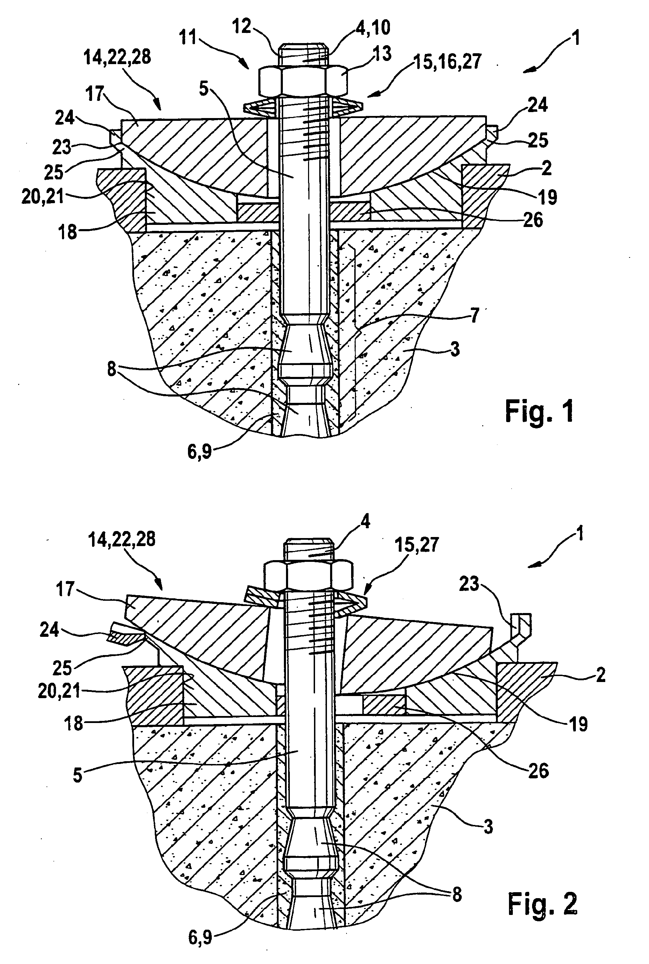

Die in Figur 1 gezeigte Befestigungsanordnung 1 dient der Befestigung eines Gegenstandes 2 an einem Untergrund 3. Die Befestigungsanordnung 1 weist hierzu einen Anker 4 mit einem länglichen Schaft 5 auf, der in ein Bohrloch 6 im Untergrund 3 eingesteckt ist. Der in das Bohrloch 6 eingesteckte Teil des Schafts 5 bildet einen Verankerungsabschnitt 7. In dem vorliegenden Ausführungsbeispiel wird dieser Verankerungsabschnitt 7 insbesondere durch mehrere sich in Einbringrichtung des Ankers 4 aufweitende Konen 8 gebildet. Der Verankerungsabschnitt 7 ist umgeben von einer aushärtbaren Masse 9, es handelt sich somit um eine chemische Verankerung. Die Konen 8 erlauben ein Nachspreizen des Ankers 4 im Falle einer Bohrlocherweiterung. Statt einer chemischen Verankerung könnte gleichermaßen eine mechanische Verankerung, d.h. beispielsweise ein spreizend wirkender Anker oder ein Hinterschnittanker, verwendet werden. An dem dem Verankerungsabschnitt 7 entgegengesetzten Ende 10 des Ankers 4 weist dieser einen Befestigungsabschnitt 11 auf. Er wird gebildet durch ein Außengewinde 12 sowie eine hierauf aufgeschraubte Mutter 13. Zwischen diesem Befestigungsabschnitt 11 und dem Gegenstand 2 ist sowohl eine Übersetzungseinrichtung 14 als auch ein Federelement 15 in Form zweier gestapelter Tellerfedern 16 angeordnet. Die Mutter 13 stützt sich in Richtung des Untergrundes 3 auf diesem Federelement 15 ab. An das Federelement 15 schließt sich die Übersetzungseinrichtung 14 in Form zweier in Axialrichtung gestapelter Lagerschalen 17, 18 an. Die Lagerschalen 17, 18 weisen zueinander gewandte sphärische Gleitflächen 19 auf und bilden zusammen ein Gleitlager 28. Die Gleitflächen 19 sind in Richtung des Untergrundes 3 gesehen konkav ausgebildet. Anders gesagt ist die dem Federelement 15 zugewandte erste Lagerschale 17 konvex geformt, während die dem Untergrund 3 zugewandte zweite Lagerschale 18 konkav geformt ist. Die zweite Lagerschale 18 ist mit einem äußeren Umfang 20 in eine Ausnehmung 21 des Gegenstandes 2 eingepasst. Dabei kann es sich um eine lose Passung oder auch um eine Presspassung handeln. Auch ist es denkbar, die zweite Lagerschale 18, die gemeinsam mit der ersten Lagerschale 17 eine Einheit 22 bildet, schweißend mit dem Gegenstand 2 zu verbinden. Genauso wäre eine Schraub- oder Klebeverbindung denkbar. Am äußeren Rand 23 der sphärischen Gleitfläche 19 weist die zweite Lagerschale 18 mehrere Querkraftelemente 24 in Form von Zapfen auf, die in die durch die Gleitflächen 19 definierte Kugelfläche ragen. Die Querkraftelemente 24 sind einstückig über Sollbruchstellen 25 mit der zweiten Lagerschale 18 verbunden. Die erste Lagerschale 17 stößt so an diesen Querkraftelementen 24 an, dass ohne die Einwirkung größerer Kräfte die beiden Lagerschalen 17, 18 starr zueinander gehalten werden. Weiterhin ist in einem ringförmigen Zwischenraum zwischen dem Schaft 5 des Ankers 4 und der zweiten Lagerschale 18 ein Dämpfungselement 26 angeordnet. Es stützt sich radial nach innen an dem Schaft 5 und radial nach außen an der zweiten Lagerschale 18 ab.

Die Befestigungsanordnung 1 wird derart montiert, dass das Federelement 15 unter Spannung steht, d.h. die Mutter 13 wird mit einem definierten Drehmoment angezogen. Der Anker 4 ist somit axial vorgespannt. Von der Mutter 13 werden diese Kräfte über das Federelement 15 auf die beiden Lagerschalen 17, 18 und weiter auf den Gegenstand 2 übertragen, so dass dieser gegen den Untergrund 3 gepresst wird. Diese Pressung bewirkt, dass bei Querkräften am Gegenstand 2, d.h. Kräften, die quer zur Längsachse des Ankers 4 wirken, diese durch Reibkräfte zwischen dem Untergrund 3 und dem Gegenstand 2 kompensiert werden. In diesem Fall wirken also keine Querkräfte auf den Anker 4. Bei weiter steigenden Querkräften können diese die induzierten Reibkräfte überschreiten. In diesem Fall werden die Kräfte über das Querkraftelement 24 von den Lagerschalen 17, 18 übertragen. Von der ersten Lagerschale 17 werden sie über das Federelement 15 auf den Anker 4 übertragen. Steigen die Querkräfte weiter an, beispielsweise in Folge eines Erdbebens, so bricht mindestens ein Querkraftelement 24 an einer Sollbruchstelle 25 ab, so dass die Lagerschalen 17, 18 die Funktion der Übersetzungseinrichtung 14 übernehmen. Es kommt zu der in Figur 2 dargestellten ausgelenkten Anordnung der Befestigungsanordnung 1. Der Gegenstand 2 ist samt der zweiten Lagerschale 18 gegenüber dem Untergrund 3 und den anderen Teilen des Ankers 4 verschoben. Aufgrund der sphärischen Form der Gleitflächen 19 ist die erste Lagerschale 17 um den Mittelpunkt der Gleitflächen 19 gegenüber der zweiten Lagerschale 18 verdreht. Damit bewegt sie sich insgesamt etwas in Richtung der Mutter 13, wodurch das Federelement 15 mehr gestaucht wird. Somit steigen die axial wirkenden Vorspannkräfte auf den Anker 4. Aufgrund der in Figur 2 dargestellten ungleichmäßigen Verformung des Federelements 15 kommt es genau genommen auch zu einer geringfügigen Biegebeanspruchung des Schafts 5. Jedoch ist diese im Vergleich zu den axial wirkenden Vorspannkräften gering und insbesondere deutlich geringer als bei dem aus dem Stand der Technik bekannten unmittelbar radial wirkenden Querkraftangriff eines Gegenstandes am Schaft eines Ankers.

In dem in Figur 2 dargestellten Zustand wirkt das Federelement 15 gleichzeitig als Rückstellelement 27. So würde das Federelement 15, ideale Gleiteigenschaften der Lagerschalen 17, 18 und zwischen dem Gegenstand 2 und dem Untergrund 3 vorausgesetzt, eine Zurückbewegung in den in Figur 1 dargestellten Zustand bewirken, sobald keine Querkräfte mehr von außen auf den Gegenstand 2 wirken. Schon bei der Bewegung von dem in Figur 1 dargestellten Zustand in den in Figur 2 dargestellten Zustand wirkt das Federelement 15 somit als Rückstellelement 27, da es der Verschiebebewegung entgegenwirkt. Weiterhin wirkt das Dämpfungselement 26, welches im Zuge der Verschiebung komprimiert wird, der Verschiebebewegung entgegen. Hierdurch können insbesondere schockbedingte Spannungsspitzen reduziert werden. Es ist grundsätzlich denkbar, dass zur Unterstützung der beschriebenen Rückstellbewegung eine Gleitschicht oder dgl. zwischen dem Gegenstand 2 und dem Untergrund 3 vorgesehen wird. Allerdings würde dies konträr zu der zuvor beschriebenen Übertragung von Querkräften über die Reibwirkung zwischen dem Gegenstand 2 und dem Untergrund 3 laufen. Gerade dieser Effekt ist jedoch für geringere Lasten wichtig, weshalb eine Gleitschicht zwischen dem Gegenstand 2 und dem Untergrund 3 eher nicht zu bevorzugen wäre.

Zusätzlich oder alternativ zu den beschriebenen Vorgängen bei einer Querkraftwirkung am Gegenstand 2 kann es zu einer Aufweitung des Bohrlochs 6 in Folge einer Rissbildung im Untergrund 3 kommen. Aufgrund der Konen 8 und der Vorspannung am Anker 4 würde dieser einen kleinen Weg in Richtung aus dem Bohrloch 6 gezogen werden und dabei nachspreizen, d.h. innerhalb der ausgehärteten Masse 9 wieder Halt finden. Gerade wenn sich eine Rissbildung im Untergrund 3 mit einer hohen Querkraft am Gegenstand 2 paaren, ist die Erhöhung der Vorspannkraft durch die Übersetzungseinrichtung 14 von besonderer Bedeutung, um die unmittelbar radial wirkende Übertragung von Querkräften auf den Schaft 5 zu vermeiden.

## Patentansprüche

1. Befestigungsanordnung mit einem Gegenstand (2) und einem Anker (4) zur Befestigung des Gegenstandes (2) an einem Untergund (3), **dadurch gekennzeichnet, dass** der Anker (4) eine Übersetzungseinrichtung (14) in Form zweier in Axialrichtung gestapelter Lagerschalen (17, 18) derart aufweist, dass eine Bewegung des mit dem Anker (4) befestigten Gegenstandes (2) relativ zum Untergrund (3) und quer zur Längsachse des Ankers (4) überwiegend in eine Erhöhung der axial wirkenden Vorspannkraft des Ankers (4) resultiert.

2. Befestigungsanordnung nach Anspruch 1, **dadurch gekennzeichnet, dass** der Anker (4) ein Querkraftelement (24) aufweist, welches versagt, bevor der Anker (4) aufgrund von Querkräften versagt.

3. Befestigungsanordnung nach Anspruch 2, **dadurch gekennzeichnet, dass** das Querkraftelement (24) eine Sollbruchstelle (25) aufweist.

4. Befestigungsanordnung nach Anspruch 1, **dadurch gekennzeichnet, dass** der Anker (4) ein Rückstellelement (27) derart aufweist, dass eine Bewegung eines mit dem Anker (4) befestigten Gegenstandes (2) relativ zum Untergrund (3) und quer zur Längsachse des Ankers (4) in eine der Bewegung entgegengesetzte Rückstellkraft auf den Gegegenstand (2) resultiert.

5. Befestigungsanordnung nach Anspruch 1, **dadurch gekennzeichnet, dass** die Übersetzungseinrichtung (14) ein Gleitlager (28) zwischen einem Befestigungsabschnitt (11) des Ankers (4) und dem Gegenstand (2) aufweist.

6. Befestigungsanordnung nach Anspruch 5, **dadurch gekennzeichnet, dass** das Gleitlager (28) sphärische Gleitflächen (19) aufweist.

7. Befestigungsanordnung nach Anspruch 5, **dadurch gekennzeichnet, dass** das Gleitlager (28) Gleitflächen (19) aufweist, die poliert und/oder beschichtet sind, und/oder dass ein Schmiermittel zwischen den Gleitflächen (19) angeordnet ist.

8. Befestigungsanordnung nach Anspruch 1, **dadurch gekennzeichnet, dass** die Übersetzungseinrichtung (14) ein axial wirkendes Federelement (15) aufweist.

9. Befestigungsanordnung nach Anspruch 5 und 8, **dadurch gekennzeichnet, dass** das Federelement (15) zwischen dem Befestigungsabschnitt (11) des Ankers (4) und dem Gleitlager (28) angeordnet ist.

10. Befestigungsanordnung nach Anspruch 1, **dadurch gekennzeichnet, dass** der Anker (4) ein Dämpfungselement (26) aufweist zur Dämpfung einer Bewegung eines mit dem Anker (4) befestigten Gegenstandes (2) relativ zum Untergrund (3) und quer zur Längsachse des Ankers (4).

11. Befestigungsanordnung nach Anspruch 1, **dadurch gekennzeichnet, dass** die Übersetzungseinrichtung (14) die Form einer in eine Ausnehmung (21) des zu befestigenden Gegenstandes (2) einsetzbaren Einheit (22) aufweist.

## Claims

1. Fixing arrangement having an article (2) and an anchor (4) for fixing the article (2) to a substrate (3), **characterized in that** the anchor (4) has a conversion device (14) in the form of two bearing shells (17, 18) stacked in the axial direction such that movement of the article (2) fixed with the anchor (4) relative to the substrate (3) and transverse to the longitudinal axis of the anchor (4) results predominantly in an increase in the axially acting pre-tensioning force of the anchor (4).

2. Fixing arrangement according to claim 1, **characterized in that** the anchor (4) has a transverse force element (24) which fails before the anchor (4) fails as a result of transverse forces.

3. Fixing arrangement according to claim 2, **characterized in that** the transverse force element (24) has a desired rupture location (25).

4. Fixing arrangement according to claim 1, **characterized in that** the anchor (4) has a restoring element (27) such that movement of an article (2) fixed with the anchor (4) relative to the substrate (3) and transverse to the longitudinal axis of the anchor (4) results in a restoring force on the article (2) opposing the movement.

5. Fixing arrangement according to claim 1, **characterized in that** the conversion device (14) has a sliding-contact bearing (28) between a mounting zone (11) of the anchor (4) and the article (2).

6. Fixing arrangement according to claim 5, **characterized in that** the sliding-contact bearing (28) has spherical sliding faces (19).

7. Fixing arrangement according to claim 5, **characterized in that** the sliding-contact bearing (28) has sliding faces (19) which are polished and/or coated, and/or a lubricant is arranged between the sliding faces (19).

8. Fixing arrangement according to claim 1, **characterized in that** the conversion device (14) has an axially acting spring element (15).

9. Fixing arrangement according to claim 5 and 8, **characterized in that** the spring element (15) is arranged between the mounting zone (11) of the anchor (4) and the sliding-contact bearing (28).

10. Fixing arrangement according to claim 1, **characterized in that** the anchor (4) has a damping element (26) for damping movement of an article (2) fixed with the anchor (4) relative to the substrate (3) and transverse to the longitudinal axis of the anchor (4).

11. Fixing arrangement according to claim 1, **characterized in that** the conversion device (14) takes the form of a unit (22) insertable into a recess (21) in the article (2) to be mounted.

## Revendications

1. Dispositif de fixation comprenant un objet (2) et une pièce d'ancrage (4) conçue pour fixer ledit objet (2) à une structure sous-jacente (3), **caractérisé par le fait que** la pièce d'ancrage (4) présente un système démultiplicateur (14) revêtant la forme de deux coquilles de palier (17, 18) en superposition dans le sens axial, de façon telle qu'un mouvement de l'objet (2) fixé par la pièce d'ancrage (4), vis-à-vis de la structure sous-jacente (3) et transversalement par rapport à l'axe longitudinal de ladite pièce d'ancrage (4), se traduise majoritairement par un accroissement de la force de précontrainte de ladite pièce d'ancrage (4), agissant dans le sens axial.

2. Dispositif de fixation selon la revendication 1, **caractérisé par le fait que** la pièce d'ancrage (4) comporte un élément (24) réagissant à des forces transversales, qui cède avant que ladite pièce d'ancrage (4) n'accuse une défaillance sous l'action de forces transversales.

3. Dispositif de fixation selon la revendication 2, **caractérisé par le fait que** l'élément (24), réagissant à des forces transversales, présente une zone (25) de rupture par destination.

4. Dispositif de fixation selon la revendication 1, **caractérisé par le fait que** la pièce d'ancrage (4) est pourvue d'un élément de rappel (27), de telle sorte qu'un mouvement d'un objet (2) fixé par ladite pièce d'ancrage (4), vis-à-vis de la structure sous-jacente (3) et transversalement par rapport à l'axe longitudinal de ladite pièce d'ancrage (4), se traduise par une force de rappel appliquée audit objet (2) dans une direction opposée audit mouvement.

5. Dispositif de fixation selon la revendication 1, **caractérisé par le fait que** le système démultiplicateur (14) présente un palier de glissement (28), interposé entre l'objet (2) et un tronçon de fixation (11) de la pièce d'ancrage (4).

6. Dispositif de fixation selon la revendication 5, **caractérisé par le fait que** le palier de glissement (28) offre des surfaces sphériques de glissement (19).

7. Dispositif de fixation selon la revendication 5, **caractérisé par le fait que** le palier de glissement (28) offre des surfaces de glissement (19) polies et/ou revêtues ; et/ou **par le fait qu'**un agent de lubrification est interposé entre lesdites surfaces de glissement (19).

8. Dispositif de fixation selon la revendication 1, **caractérisé par le fait que** le système démultiplicateur (14) est muni d'un élément élastique (15) agissant dans le sens axial.

9. Dispositif de fixation selon les revendications 5 et 8, **caractérisé par le fait que** l'élément élastique (15) est interposé entre le palier de glissement (28) et le tronçon de fixation (11) de la pièce d'ancrage (4).

10. Dispositif de fixation selon la revendication 1, **caractérisé par le fait que** la pièce d'ancrage (4) présente un élément amortisseur (26) dévolu à l'amortissement d'un mouvement d'un objet (2) fixé par ladite pièce d'ancrage (4), vis-à-vis de la structure sous-jacente (3) et transversalement par rapport à l'axe longitudinal de ladite pièce d'ancrage (4).

11. Dispositif de fixation selon la revendication 1, **caractérisé par le fait que** le système démultiplicateur (14) revêt la forme d'un ensemble unitaire (22) qui peut être inséré dans un évidement (21) de l'objet (2) devant être fixé.
